# EUROPÄISCHE PATENTSCHRIFT

(11) **EP 3 050 745 B1**
(45) Veröffentlichungstag und Bekanntmachung des Hinweises auf die Patenterteilung: **19.08.2020**
(21) Anmeldenummer: 16151795.8
(22) Anmeldetag: 19.01.2016
(51) Int. Cl.: G05D 16/20

(54) **PNEUMATISCHE STEUER- UND MESSVORRICHTUNG SOWIE SITZKOMFORTSYSTEM**
PNEUMATIC CONTROL AND MEASURING APPARATUS AND SEAT COMFORT SYSTEM
DISPOSITIF DE MESURE ET DE COMMANDE PNEUMATIQUE ET SYSTEME DE SIEGE CONFORTABLE

(30) Priorität: 27.01.2015 DE 202015000540 U
(43) Veröffentlichungstag der Anmeldung: 03.08.2016
(73) Patentinhaber: Kendrion Kuhnke Automotive GmbH, 23714 Malente (DE)
(72) Erfinder: DERJONG, Jan, 24114 Kiel (DE)
(74) Vertreter: Seemann & Partner Patentanwälte mbB

(56) Entgegenhaltungen:
- DE-U1-202012 002 071
- US-A1- 2002 104 369
- US-A1- 2011 227 388
- US-A1- 2012 143 108
- US-A1- 2014 232 155
- US-A1- 2014 265 492

## Beschreibung

Die Erfindung betrifft eine pneumatische Steuer- und Messvorrichtung mit einem Ventil und mit einem Drucksensor, wobei das Ventil einen Eingangskanal, einen Druckkanal, einen Ausgangskanal und ein von einem Aktor geschaltetes oder schaltbares Dichtelement umfasst, und wobei der Eingangskanal fluidisch mit einem Druckluftversorgungskanal verbunden ist und das Dichtelement dazu eingerichtet ist, den Eingangskanal mit dem Druckkanal zu verbinden, so dass an einem mit dem Druckkanal fluidisch kommunizierenden Ausgangsanschluss des Ventils ein in dem Druckluftversorgungskanal bereitgestellter Versorgungsdruck bereitgestellt wird oder bereitstellbar ist, wobei ferner ein Drucksensor zum Erfassen eines an dem Ausgangsanschluss anliegenden Drucks umfasst ist, welcher fluidisch mit dem Druckkanal verbunden oder in den Druckkanal integriert ist.

Ferner betrifft die Erfindung ein Sitzkomfortsystem, umfassend eine solche pneumatische Steuer- und Messvorrichtung.

Dynamische Sitzkomfortsysteme für beispielsweise Autositze sind allgemein bekannt. Sie verbessern den Komfort und die Gesundheitsverträglichkeit vor allem bei langen Reisen. Sowohl statische als auch dynamische Komfortsysteme arbeiten mit druckluftgesteuerten Kissen, welche in die Fahrzeugsitze integriert sind. Die Luftkissen werden pneumatisch betätigt und verändern statisch oder dynamisch die Kontur der Sitzfläche.

Ein weiteres Bauteil eines solchen Sitzkomfortsystems ist neben dem entsprechend ausgestatteten Sitz eine pneumatische Steuer- und Messvorrichtung. Diese ist versorgungsseitig an eine Druckluftversorgungsleitung angeschlossen und in der Lage, die einzelnen in den Sitz integrierten Kissen druckgeregelt anzusteuern. Es wird ein Differenzdruck zwischen dem innerhalb des Kissens herrschenden Druck, in der Regel ein Überdruck, und dem Atmosphären- bzw. Umgebungsdruck gemessen.

Bekannte pneumatische Steuer- und Messvorrichtungen beanspruchen einen erheblichen Bauraum und sind außerdem kostenintensive Bauteile des Sitzkomfortsystems. Es werden beispielsweise Anschlussadapter aus einem Elastomermaterial eingesetzt, welche auf den Ausgangsanschluss eines Ventils aufgesetzt sind. Diese Anschlussadapter dienen einerseits zur Verbindung der über das Ventil gesteuerten Druckluftversorgung mit den expandierbaren Kissen des Sitzes, andererseits ebenso der Aufnahme eines Drucksensors, bei dem es sich um ein diskretes elektronisches Bauteil handelt.

Aus US 2014/0265492 A1 ist eine pneumatische Steuer- und Messvorrichtung zur Steuerung eines Sitzkomfortsystems bekannt.

Diese Vorrichtung wird versorgungsseitig an eine Hochdruckversorgungsquelle und über einen weiteren Anschluss an eine Versorgungsquelle mit geringerem Druck angeschlossen. In einem Gehäuse befindet sich eine Hochdruckkammer und eine Niederdruckkammer, die jeweils durch ein Mikroventil mit einer primären Drucckammer verbunden sind. Die primäre Druckkammer ist mit einem Druckluftausgangsanschluss fluidisch verbunden. In der primären Druckluftkammer ist ein Drucksensor vorhanden.

Es ist eine Aufgabe der Erfindung, eine pneumatische Steuer- und Messvorrichtung sowie ein Sitzkomfortsystem mit einer pneumatischen Steuer- und Messvorrichtung anzugeben, welche kostengünstig und kompakt ist.

Die Aufgabe wird gelöst durch eine pneumatische Steuer- und Messvorrichtung mit einem Ventil und mit einem Drucksensor, wobei das Ventil einen Eingangskanal, einen Druckkanal, einen Ausgangskanal und ein von einem Aktor geschaltetes oder schaltbares Dichtelement umfasst, und wobei der Eingangskanal fluidisch mit einem Druckluftversorgungskanal verbunden ist und das Dichtelement dazu eingerichtet ist, den Eingangskanal mit dem Druckkanal zu verbinden, so dass an einem mit dem Druckkanal fluidisch kommunizierenden Ausgangsanschluss des Ventils ein in dem Druckluftversorgungskanal bereitgestellter Versorgungsdruck bereitgestellt wird oder bereitstellbar ist, wobei ferner ein Drucksensor zum Erfassen eines an dem Ausgangsanschluss anliegenden Drucks umfasst ist, welcher fluidisch mit dem Druckkanal verbunden oder in den Druckkanal integriert ist, dadurch gekennzeichnet, dass der Drucksensor ein leiterplattenintegrierter Drucksensor ist, wobei das Ventil einen Ventilkörper umfasst, und wobei der Eingangskanal, der Druckkanal und der Ausgangskanal im Inneren des Ventilkörpers verlaufen und an einer Außenseite des Ventilkörpers der Eingangskanal und der Ausgangskanal ausmünden und der Ausgangsanschluss an der Außenseite des Ventilkörpers angeordnet ist, wobei in dem Ventilkörper ein Messkanal vorhanden ist, der an einem ersten Ende in den Druckkanal ausmündet und an einem gegenüberliegenden zweiten Ende an der Außenseite des Ventilkörpers ausmündet, wobei das zweite Ende des Messkanals an einer Unterseite des Ventilkörpers, die Teil der Außenseite ist, ausmündet, wobei das Ventil derart auf der Leiterplatte montiert ist, dass die Unterseite des Ventilkörpers einer Oberseite der Leiterplatte im Sensorbereich gegenüberliegt und zwischen der Unterseite des Ventilkörpers und der Oberseite der Leiterplatte im Sensorbereich eine Druckkammer vorhanden ist, welche durch ein zwischen der Oberseite der Leiterplatte und der Unterseite des Ventilkörpers vorhandenes Dichtelement gegenüber der Atmosphäre abgedichtet ist.

Die Erfindung beruht auf der Erkenntnis, dass durch Einsatz eines leiterplattenintegrierten Drucksensors die pneumatische Steuer- und Messvorrichtung konstruktiv vereinfacht wird und somit wesentlich wirtschaftlicher herstellbar ist. Auf die Verwendung eines diskreten Drucksensors, der nicht unerheblich zu den Gesamtkosten des Systems beiträgt, wird vorteilhaft verzichtet. Gleichzeitig sinkt der Aufwand bei der Herstellung der Steuer- und Messvorrichtung, da die Leiterplatte nicht mit dem diskreten Drucksensor bestückt werden muss. Auch dies bedeutet einen Kostenvorteil.

Gemäß einer vorteilhaften Ausführungsform ist die pneumatische Steuer- und Messvorrichtung dadurch fortgebildet, dass das Ventil ein erstes von einem ersten Aktor geschaltetes oder schaltbares erstes Dichtelement und ein zweites von einem zweiten Aktor geschaltetes oder schaltbares zweites Dichtelement umfasst, wobei das erste Dichtelement dazu eingerichtet ist, den Eingangskanal mit dem Druckkanal zu verbinden, und wobei das zweite Dichtelement dazu eingerichtet ist, den Druckkanal mit dem mit der Atmosphäre kommunizierenden Ausgangskanal zu verbinden, so dass eine Druckentlastung in dem Druckkanal herbeigeführt wird oder herbeiführbar ist.

Ein geeigneter leiterplattenintegrierter Drucksensor ist beispielsweise ein kapazitiver Drucksensor. Insbesondere ist ein kapazitiver Drucksensor vorgesehen, der einen ersten Grundflächenkörper, einen zweiten Grundflächenkörper und einen zwischen dem ersten

Grundflächenkörper und dem zweiten Grundflächenkörper mittels wenigstens eines Abstandshalters befestigten flächigen Membrankörpers ein Hohlraum ausgebildet ist, der von einer Seite eines Grundflächenkörpers begrenzt ist, wobei der Grundflächenkörper wenigstens eine den Grundflächenkörper durchdringende Öffnung aufweist, die den Hohlraum mit einem Volumen außerhalb des Drucksensors verbindet, so dass sich bei einer Druckänderung in dem Hohlraum das Volumen des Hohlraums durch Durchbiegung des Membrankörpers verändert, wobei wenigstens die den Hohlraum begrenzenden Flächen des Grundflächenkörpers und des Membrankörpers eine metallische Schicht oder Beschichtung aufweisen, wobei die Grundflächenkörper und der Membrankörper als Leiterplatten auf der Basis eines nichtleitenden Leiterplattensubstrats auf der Grundlage von Papieren, Glasfasergeweben oder Glasfliesen in einer Harzmatrix ausgebildet sind.

Gemäß einer vorteilhaften Ausführungsform ist vorgesehen, dass die pneumatische Steuer- und Messvorrichtung eine Leiterplatte umfasst und das Ventil, elektronische Bauteile und elektrische Anschlusskontakte der Steuer- und Messvorrichtung auf der Leiterplatte montiert sind, wobei der Drucksensor in einem Sensorbereich in die Leiterplatte integriert ist. Vorteilhaft wird durch diese Maßnahmen eine besonders kompakte pneumatische Steuer- und Messvorrichtung bereitgestellt.

Gemäß einer weiteren Ausführungsform ist die pneumatische Steuer- und Messvorrichtung dadurch fortgebildet, dass ein Adapter aus einem Elastomermaterial auf den Ausgangsanschluss aufgesteckt ist, wobei der Adapter einen weiteren Ausgangsanschluss bereitstellt und ein Adaptervolumen einschließt, welches mit dem Ausgangsanschluss des Ventils, dem weiteren Ausgangsanschluss des Adapters und mit einer Oberseite der Leiterplatte im Sensorbereich kommuniziert, so dass mit dem leiterplattenintegrierten Drucksensor ein Druck innerhalb des Adaptervolumens bestimmt wird oder bestimmbar ist.

Vorteilhaft erfordert die pneumatische Steuer- und Messvorrichtung gemäß der genannten Ausführungsform lediglich minimale verbessernde Anpassungen einer bereits bekannten Steuer- und Messvorrichtung, nämlich die Integration des üblicherweise diskret ausgeführten Drucksensors in die Leiterplatte. Mit anderen Worten wird zur Herstellung einer solchen pneumatischen Steuer- und Messvorrichtung eine Leiterplatte verwendet, in die in einem Sensorbereich ein Drucksensor integriert ist. So ist es möglich, die Gesamtkosten des Systems vorteilhaft zu senken. Dies ist insbesondere der Fall, da der Herstellungsschritt, in dem der diskrete Drucksensor auf der Leiterplatte montiert wird, entfällt.

Das Ventil umfasst einen Ventilkörper, wobei der Eingangskanal, der Druckkanal und der Ausgangskanal im Inneren des Ventilkörpers verlaufen und an einer Außenseite des Ventilkörpers der Eingangskanal und der Ausgangskanal ausmünden und der Ausgangsanschluss an der Außenseite des Ventilkörpers angeordnet ist, wobei in dem Ventilkörper ein Messkanal vorhanden ist, der an einem ersten Ende in den Druckkanal ausmündet und an einem gegenüberliegenden zweiten Ende an der Außenseite des Ventilkörpers ausmündet.

Ferner mündet das zweite Ende des Messkanals an einer Unterseite des Ventilkörpers, die Teil der Außenseite ist, aus, wobei das Ventil derart auf der Leiterplatte montiert ist, dass die Unterseite des Ventilkörpers einer Oberseite der Leiterplatte im Sensorbereich gegenüberliegt.

Zwischen der Unterseite des Ventilkörpers und der Oberseite der Leiterplatte ist im Sensorbereich eine Druckkammer vorhanden, welche durch ein zwischen der Oberseite der Leiterplatte und der Unterseite des Ventilkörpers vorhandenes Dichtelement gegenüber der Atmosphäre abgedichtet ist.

Der Verzicht auf den aus einem Elastomermaterial hergestellten Adapter verringert die Herstellungskosten der pneumatischen Steuer- und Messvorrichtung. Außerdem wird vorteilhaft der benötigte Bauraum erheblich verringert. Somit wird eine kostengünstigere und gleichzeitig kleiner bauende pneumatische Steuer- und Messvorrichtung bereitgestellt.

Gemäß einer weiteren Ausführungsform ist vorgesehen, dass der Aktor ein elektromagnetischer Aktor ist, insbesondere der erste und/oder der zweite Aktor elektromagnetische Aktoren sind. Beispielsweise weist die pneumatische Steuer- und Messvorrichtung geeignete Spulen auf, welche den Ventilkörper umgeben und Ankerelemente antreiben, welche dazu eingerichtet sind, die entsprechenden schaltbaren Dichtelemente so zu bewegen, dass die gewünschte fluidische Verbindung hergestellt oder unterbrochen wird.

Eine fluidische Verbindung ist insbesondere eine luftdichte Verbindung oder eine druckluftdichte bzw. Druckluft-Verbindung. Das Fluid, Arbeitsfluid oder fluidische Medium ist also insbesondere Luft bzw. Druckluft. Dies betrifft vorteilhaft alle Ausführungsformen.

Die Aufgabe wird ferner gelöst durch ein Sitzkomfortsystem, umfassend eine pneumatische Steuer- und Messvorrichtung nach einem oder mehreren der genannten Aspekte, wobei das Sitzkomfortsystem ferner einen Sitz, insbesondere einen Autositz, mit zumindest einem integrierten Luftkissen umfasst, wobei dieses Luftkissen fluidisch an den Ausgangsanschluss der pneumatischen Steuer- und Messvorrichtung angeschlossen ist.

Gleiche oder ähnliche Vorteile, wie sie bereits im Hinblick auf die pneumatische Steuer- und Messvorrichtung erwähnt wurden, treffen auch auf das Sitzkomfortsystem zu und sollen zur Vermeidung von Wiederholungen nicht erneut genannt werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird.

Es zeigen:
- Fig. 1:: eine schematische perspektivische Detailansicht einer pneumatischen Steuer- und Messvorrichtung,
- Fig. 2:: eine schematische perspektivische Totale einer pneumatischen Steuer- und Messvorrichtung,
- Fig. 3:: eine schematische Perspektivansicht einer entlang eines Längsschnitts geöffneten pneumatischen Steuer- und Messvorrichtung und
- Fig. 4:: eine Detailansicht der aus Fig. 3 bekannten Darstellung.

In den Zeichnungen sind jeweils gleiche oder gleichartige Elemente und/oder Teile mit denselben Bezugsziffern versehen, so dass von einer erneuten Vorstellung jeweils abgesehen wird.

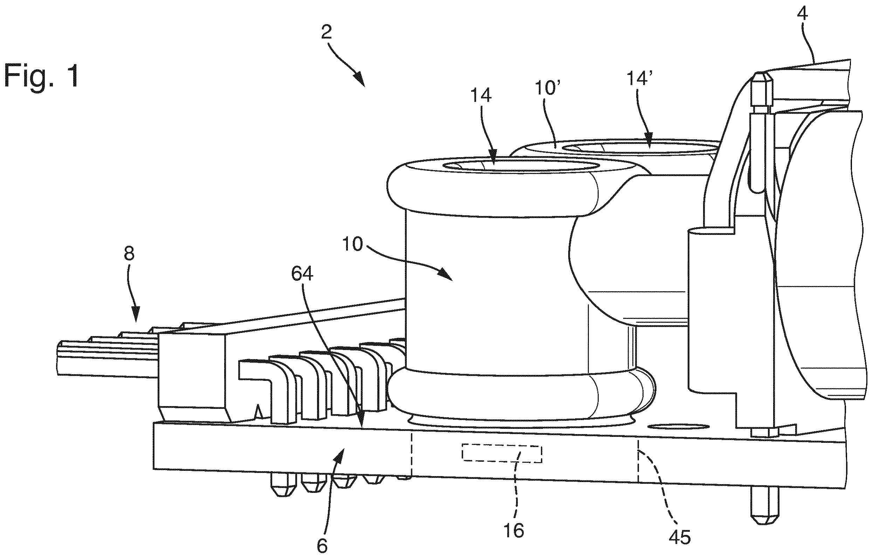

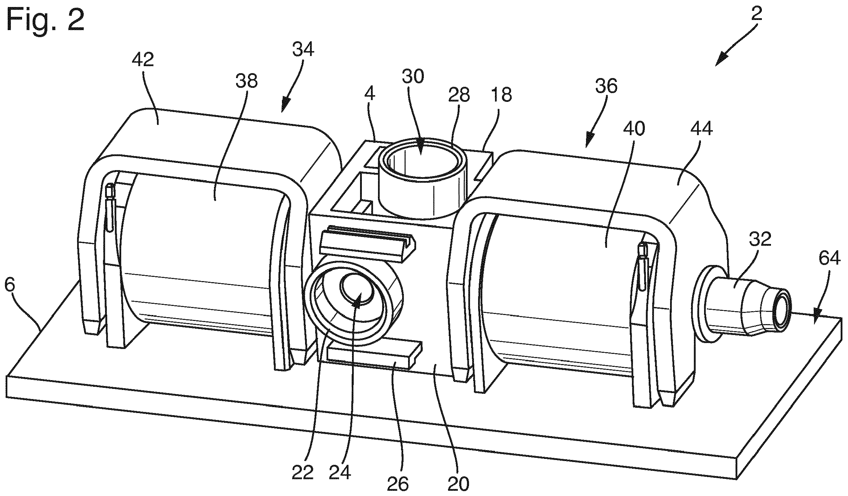

Fig. 1 zeigt in schematischer Perspektivansicht ein Detail einer pneumatischen Steuer- und Messvorrichtung 2. Diese umfasst ein Ventil 4, welches lediglich abschnittsweise dargestellt ist. Weitere Einzelheiten betreffend die Ausgestaltung des Ventils 4 werden im Zusammenhang mit der Beschreibung der Fig. 2 bis 4 genannt.

Lediglich beispielhaft wird im Folgenden auf ein 3/3-Wege-Ventil 4 Bezug genommen. Als weitere nicht dargestellte Ausführungsbeispiele sind ebenso Ventile anderer Bauart, beispielsweise 3/2-Wege-Ventile vorgesehen, auf die die folgenden Ausführungen analog zutreffen.

Das Ventil 4 ist auf einer Leiterplatte 6 montiert, beispielsweise mithilfe von Durchsteckverbindungen. Ferner sind auf der Leiterplatte 6 nicht dargestellte elektronische Bauteile der pneumatischen Steuer- und Messvorrichtung 2 sowie elektrische Anschlusskontakte 8 montiert. Das Ventil 4 umfasst einen in Fig. 1 nicht sichtbaren Ausgangsanschluss, auf den ein Adapter 10 aus einem Elastomermaterial aufgesteckt ist.

In der perspektivischen Darstellung von Fig. 1 ist ein weiterer Adapter 10' im Hintergrund sichtbar. Dieser ist auf den Ausgangsanschluss eines weiteren ebenfalls nicht sichtbaren Ventils aufgesteckt, welches analog zu dem Ventil 4 aufgebaut ist. Mit anderen Worten umfasst also die pneumatische Steuer- und Messvorrichtung 2 eine Mehrzahl von Ventilen 4.

Die Adapter 10, 10' stellen weitere Ausgangsanschlüsse 14, 14' bereit. Diese sind dazu vorgesehen, beispielsweise Steckverbinder von Druckluftleitungen aufzunehmen, welche mit expandierbaren Luftkissen eines Sitzkomfortsystems verbunden sind. Solche Luftkissen sind bevorzugt in Sitze, insbesondere Autositze, integriert, und stellen gemeinsam mit der pneumatischen Steuer- und Messvorrichtung 2 ein Sitzkomfortsystem dar. Dieses bietet beispielsweise eine dynamische Komfortfunktion, wie eine Lordosenstütze oder eine Seitenwangenverstellung. Ebenso ist möglicherweise eine dynamische Komfortfunktion vorgesehen, wie z. B. ein Massagesystem.

Der Adapter 10 schließt in seinem Innenraum ein Adaptervolumen ein, welches einerseits mit dem Ausgangsanschluss des Ventils 4 und andererseits mit dem weiteren Ausgangsanschluss 14 des Adapters 10 kommuniziert. Ferner kommuniziert das Adaptervolumen fluidisch mit einer Oberseite 64 der Leiterplatte 6 und dies in einem Sensorbereich 45.

Die Leiterplatte 6 umfasst in dem Sensorbereich 45 einen leiterplattenintegrierten Drucksensor 16. Bevorzugt handelt es sich bei diesem um einen kapazitiven Sensor. Insbesondere umfasst die Leiterplatte 6 eine Mehrzahl leiterplattenintegrierter Drucksensoren, insbesondere für jedes der Ventile 4, die auf der Leiterplatte 6 angeordnet sind, einen jeweils dem Ventil 4 zugeordneten leiterplattenintegrierten Drucksensor 16. Aus Gründen der Übersichtlichkeit ist lediglich ein Drucksensor 16 in Fig. 1 angedeutet.

Der leiterplattenintegrierte Drucksensor 16 ist insbesondere so ausgestaltet, wie der aus DE 10 2011 082 522 B3 bekannte kapazitive Drucksensor. Die Offenbarung dieses Dokumentes ist hiermit vollumfänglich in die vorliegende Beschreibung aufgenommen.

Mithilfe des leiterplattenintegrierten Drucksensors 16 ist ein innerhalb des Adaptervolumens herrschender Druck bestimmbar. Da das Adaptervolumen unmittelbar mit dem Ausgangsanschluss 14 kommuniziert, ist es mit dem Drucksensor 16 ebenfalls möglich, den Ausgangsdruck der pneumatischen Steuer- und Messvorrichtung 2 zu bestimmen. Bei einem Sitzkomfortsystem findet innerhalb kurzer Zeit ein Druckausgleich im System statt. Der Ausgangsdruck entspricht also dem im Luftkissen des Systems herrschenden Druck, so dass sein Wert zur druckgesteuerten Regelung des Sitzkomfortsystems herangezogen werden kann.

In Vergleich zu einer pneumatischen Steuer- und Messvorrichtung 2, bei der diskrete und beispielsweise auf einer Oberseite 64 der Leiterplatte 6 montierte Drucksensoren eingesetzt werden, erzielt die pneumatische Steuer- und Messvorrichtung 2 gemäß dem dargestellten Ausführungsbeispiel einen erheblichen Kostenvorteil, da die Drucksensoren 16 bereits in die Leiterplatte 6 integriert sind.

Fig. 2 zeigt in schematischer Perspektivansicht eine weitere pneumatische Steuer- und Messvorrichtung 2. Diese umfasst ein Ventil 4, das auf einer Oberseite 64 der Leiterplatte 6 montiert ist.

Ein Ventilkörper 18 des Ventils 4 weist an seiner Außenseite 20 einen Eingangsanschluss 22 auf, der einen Eingangskanal 24 mit einem fluidischen Versorgungskanal, insbesondere mit einem Druckluftversorgungskanal, verbindet. Beispielsweise ist das Ventil 4 so ausgestaltet, dass auf der Leiterplatte 6 eine Mehrzahl von Ventilen 4 dieses Typs nebeneinander angeordnet werden und mit einem gemeinsamen Versorgungskanal koppelbar sind. Die einzelnen Ventile 4 sind untereinander an ihren jeweiligen einander gegenüberliegenden Seiten des Ventilkörpers 18 miteinander verbunden. An der Außenseite 20 vorhandene Eingangsanschlüsse 22 benachbarter Ventile 4 sind über Rastverbindungen miteinander koppelbar. Zu diesem Zweck sind an der Außenseite 20 Rastverbindungselemente 26 vorgesehen. So kann eine ganze Ventilbatterie oder ein zusammengesteckter Ventilblock über eine einzige Druckluftversorgungsleitung versorgt werden.

Ein Arbeitsfluid, insbesondere Druckluft, wird dem Ventil 4 über den Eingangskanal 24 zugeführt. Von dem einzelnen Ventil 4 wird das Arbeitsfluid an einem Ausgangsanschluss 32 beispielsweise einem Luftkissen bereitgestellt. Der Ausgangsanschluss 32 ist also insbesondere über eine Druckluftleitung mit einem expandierbaren Luftkissen eines Sitzkomfortsystems verbunden. Das Arbeitsfluid, also insbesondere Druckluft, verlässt das Ventil 4 über einen Ausgangskanal 30, der auf der Außenseite 20 des Ventilkörpers 18 vorhanden ist und von einem Abluftstutzen 28 umgeben ist.

Der Ausgangskanal 30 kommuniziert mit der umgebenden Atmosphäre. Mit anderen Worten wird also das Arbeitsfluid in die Umgebung entlassen. So wird eine Druckentlastung beispielsweise in einem mit dem Ausgangsanschluss 32 verbundenen Luftkissen herbeigeführt.

Zum Schalten des Ventils 4 umfasst dieses einen ersten Aktor 34 und einen zweiten Aktor 36. Gemäß dem in Fig. 2 dargestellten Ausführungsbeispiel handelt es sich um elektromagnetische Antriebe. Diese umfassen jeweils eine Magnetspule, d.h. eine erste Magnetspule 38 bzw. eine zweite Magnetspule 40. Der erste bzw. zweite Aktor 34, 36 umfasst ferner jeweils einen innenliegenden beweglichen Anker, welcher dazu eingerichtet ist, ein innenliegendes schaltbares Dichtelement zu bewegen. Der magnetische Fluss in den elektromagnetischen Antrieben wird durch ein außenliegendes erstes bzw. zweites Joch 42, 44 geschlossen.

Auf der Leiterplatte 6 sind ferner nicht dargestellte elektronische Bauteile sowie ebenfalls nicht dargestellte elektrische Anschlusskontakte der Steuer- und Messvorrichtung 2 montiert. In die Leiterplatte 6 ist außerdem ein Drucksensor 16 integriert.

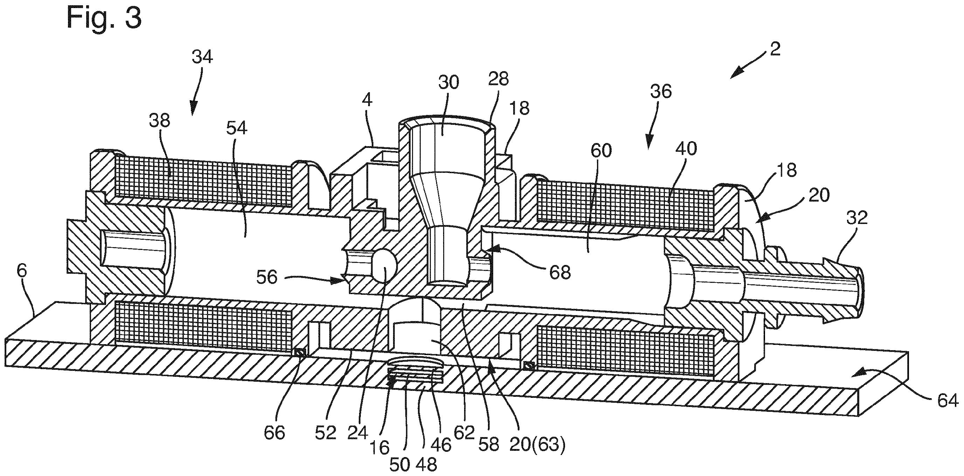

Fig. 3 zeigt die aus Fig. 2 bekannte pneumatische Steuer- und Messvorrichtung 2 ebenfalls in schematischer Perspektivansicht, wobei ein Schnitt entlang einer senkrecht verlaufenden in Längsaxialrichtung des Ventils 4 orientierten Ebene vorgenommen wurde. Eine dem Betrachter zugewandte Hälfte des Ventils 4 ist nicht dargestellt, um einen Blick in das Innere des Ventils 4 und der Leiterplatte 6 zu ermöglichen.

Der in die Leiterplatte 6 integrierte Drucksensor 16 ist bevorzugt ein kapazitiver Drucksensor. Er weist einen dem Ventil 4 zugewandten ersten Grundflächenkörper 46, einen an der Unterseite 63 der Leiterplatte 6 vorhandenen zweiten Grundflächenkörper 48 und einen zwischen dem ersten Grundflächenkörper 46 und dem zweiten Grundflächenkörper 48 liegenden Membrankörper 50 auf. Der erste Grundflächenkörper 46, der Membrankörper 50 und der zweite Grundflächenkörper 48 sind in eine Richtung senkrecht zur Fläche, in der sich die Leiterplatte 6 erstreckt, voneinander beabstandet. Zu beiden Seiten des Membrankörpers 50 ist jeweils ein Hohlraum ausgebildet. Ein erster Hohlraum ist von dem ersten Grundflächenkörper 46 und dem Membrankörper 50 in dieser senkrechten Richtung begrenzt. Der zweite Hohlraum ist von dem Membrankörper 50 und dem zweiten Grundflächenkörper 48 in senkrechter Richtung begrenzt.

Ferner sind in Fig. 3 nicht dargestellte Öffnungen vorhanden, welche in dieser senkrechten Richtung durch den ersten bzw. zweiten Grundflächenkörper 46, 48 verlaufen. So ist eine erste Öffnung vorhanden, welche den Hohlraum zwischen dem ersten Grundflächenkörper 46 und dem Membrankörper 50 mit einer darüber liegenden Druckkammer 52 verbindet. Durch den zweiten Grundflächenkörper 48 erstreckt sich eine zweite Öffnung bzw. Bohrung, welche den Hohlraum zwischen dem Membrankörper 50 und dem zweiten Grundflächenkörper 48 mit einer Unterseite 63 der Leiterplatte 6 und somit mit der Umgebungsatmosphäre verbindet.

Es liegt also mit anderen Worten in dem ersten Hohlraum zwischen dem ersten Grundflächenkörper 46 und dem Membrankörper 50 der in der Druckkammer 52 herrschende Druck an. Hingegen liegt in dem zweiten Hohlraum zwischen dem Membrankörper 50 und dem zweiten Grundflächenkörper 48 Umgebungs- oder Atmosphärendruck an. Infolge des Druckunterschieds zwischen diesen beiden Drücken, welche in dem ersten und zweiten Hohlraum vorliegen, verformt sich der Membrankörper 50 entweder in Richtung des Ventils 4 oder von diesem weg.

Die den Hohlraum begrenzenden Flächen des ersten und zweiten Grundflächenkörpers 46, 48 sowie die den ersten bzw. zweiten Hohlraum begrenzenden Flächen des Membrankörpers 50 sind metallisiert bzw. weisen eine metallische Schicht auf. So entstehen zwei Kondensatoren, deren Kapazitäten sich in Abhängigkeit der Druckdifferenz zwischen den beiden Kammern verändern. Durch einen Vergleich der beiden Kapazitäten ist es möglich, einen Differenzdruck zwischen dem in der ersten und der zweiten Kammer herrschenden Druck zu messen.

Der erste und der zweite Grundflächenkörper 46, 48 sowie der Membrankörper 50 sind bevorzugt auf der Basis eines nicht leitenden Leiterplattensubstrats hergestellt. Beispielsweise ist ein solches Leiterplattensubstrat auf der Grundlage von Papier, Glasfasergeweben oder Glasfaservliesen oder einer Harzmatrix ausgebildet.

Der leiterplattenintegrierte Drucksensor 16 ist ferner bevorzugt entsprechend der Offenbarung von DE 10 2011 082 522 B3 ausgebildet. Die Offenbarung dieses Dokuments ist vollumfänglich in die vorliegende Beschreibung aufgenommen.

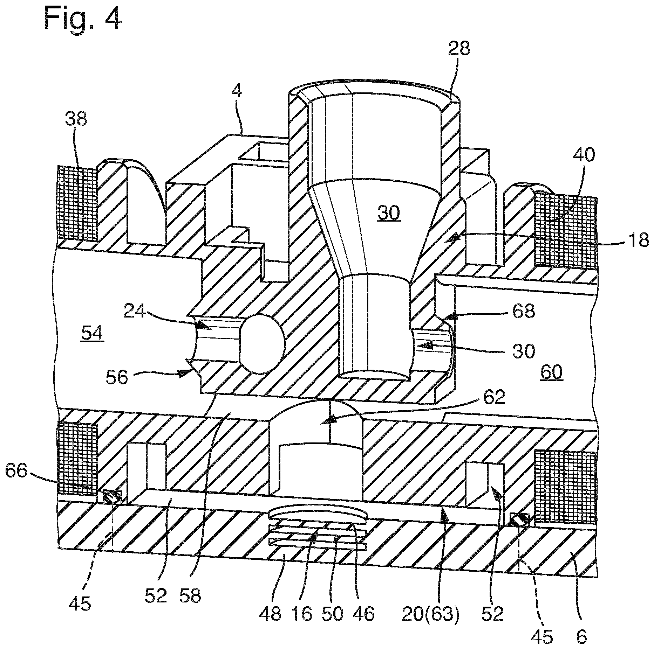

Fig. 4 zeigt eine Detailansicht der aus Fig. 3 bekannten perspektivischen Darstellung des Ventils 4. Im Folgenden wird die Funktionsweise des Ventils 4 anhand von Fig. 3 und 4 erläutert.

Ein über den Eingangskanal 24 bereit gestellter Versorgungsdruck gelangt in eine erste Kammer 54, sofern ein schaltbares Dichtelement, welches auf einem ersten Dichtsitz 56 aufsitzt und aus Gründen der Übersichtlichkeit nicht dargestellt ist, den Weg von dem Eingangskanal 24 in die erste Kammer 54 frei gibt. Dieses erste Dichtelement wird von der ersten Magnetspule 38, welche als erster Aktor 34 dient, betätigt. Das fluidische Medium, insbesondere Druckluft, gelangt von der ersten Kammer 54 über einen Überströmkanal 58 in eine zweite Kammer 60 und wird am Ausgangsanschluss 32 bereitgestellt. Mit dem Ausgangsanschluss 32 ist beispielsweise ein Druckluftschlauch verbunden, welcher zu einem expandierbaren Kissen eines Sitzkomfortsystems führt. Sobald das erste Dichtelement am ersten Dichtsitzt 56 die erste Kammer 54 gegenüber dem Eingangskanal 24 und somit dem Versorgungsdruck schließt, stellt sich in der ersten Kammer 54, der zweiten Kammer 60, dem Überströmkanal 58 und dem an dem Ausgangsanschluss 32 angeschlossenen System der gleiche Druck ein - es findet ein Druckausgleich statt.

Ausgehend von dem Überströmkanal 58 ist ein Messkanal 62 vorhanden, welcher die Druckkammer 52 mit dem Überströmkanal 58 verbindet. So ist es möglich, mit dem leiterplattenintegrierten Drucksensor 16 den Druck zu messen, welcher in dem Überströmkanal 58 der ersten und der zweiten Kammer 54, 60 sowie der Druckkammer 52 herrscht. Die erste und zweite Kammer 54, 60 bilden gemeinsam mit dem Überströmkanal 58 einen Druckkanal des Ventils 4.

Dieser Druckkanal verläuft im Inneren des Ventilkörpers 18 und mündet an dem an einer Außenseite des Ventilkörpers 18 vorhandenen Ausgangsanschluss 32 aus. Der Messkanal 62 verläuft ebenfalls innerhalb des Ventilkörpers 18, er mündet an einem ersten Ende in diesen Druckkanal und an einem gegenüberliegenden zweiten Ende an einer Außenseite 20 des Ventilkörpers 18 aus. Mit anderen Worten liegt also die Druckkammer 52 an der Außenseite 20, genauer an der Unterseite 63, des Ventilkörpers 18. Die Druckkammer 52 ist gegenüber einer Oberseite 64 der Leiterplatte 6 mithilfe einer umlaufenden Dichtung 66 abgedichtet. Die Dichtung 66 befindet sich direkt auf der Oberseite 64 der Leiterplatte 6.

Zum Ablassen des Drucks wird ein zweites Dichtelement geöffnet, welches mit dem zweiten Dichtsitz 68 zusammenwirkt und aus Gründen der Übersichtlichkeit nicht dargestellt ist. Dieses zweite Dichtelement wird von der zweiten Magnetspule 40, welche als zweiter Aktor 36 dient, geschaltet. Es wird der Ausgangskanal 30 mit der zweiten Kammer 60 verbunden, so dass über dem Ausgangskanal 30 eine Druckentlastung in dem System herbeigeführt wird. Der Ausgangskanal 30 mündet in die umgebende Atmosphäre, so dass die vormals im System vorhandene Druckluft in die Umgebung entlassen wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: pneumatische Steuer- und Messvorrichtung
- 4: Ventil
- 6: Leiterplatte
- 8: elektrische Anschlusskontakte
- 10, 10': Adapter
- 14, 14': weiterer Ausgangsanschluss
- 16: leiterplattenintegrierter Drucksensor
- 18: Ventilkörper
- 20: Außenseite
- 22: Eingangsanschluss
- 24: Eingangskanal
- 26: Rastverbindungselemente
- 28: Abluftstutzen
- 30: Ausgangskanal
- 32: Ausgangsanschluss
- 34: erster Aktor
- 36: zweiter Aktor
- 38: erste Magnetspule
- 40: zweite Magnetspule
- 42: erstes Joch
- 44: zweites Joch
- 45: Sensorbereich
- 46: erster Grundflächenkörper
- 48: zweiter Grundflächenkörper
- 50: Membrankörper
- 52: Druckkammer
- 54: erste Kammer
- 56: erster Dichtsitz
- 58: Überströmkanal
- 60: zweite Kammer
- 62: Messkanal
- 63: Unterseite
- 64: Oberseite
- 66: Dichtung
- 68: zweiter Dichtsitz

## Patentansprüche

1. Pneumatische Steuer- und Messvorrichtung (2) mit einem Ventil (4) und mit einem Drucksensor (16), wobei das Ventil (4) einen Eingangskanal (24), einen Druckkanal (54, 58, 60), einen Ausgangskanal (30) und ein von einem Aktor (38) geschaltetes oder schaltbares Dichtelement umfasst, und wobei der Eingangskanal (24) fluidisch mit einem Druckluftversorgungskanal verbunden ist und das Dichtelement dazu eingerichtet ist, den Eingangskanal (24) mit dem Druckkanal (54, 58, 60) zu verbinden, so dass an einem mit dem Druckkanal (54, 58, 60) fluidisch kommunizierenden Ausgangsanschluss (32) des Ventils (4) ein in dem Druckluftversorgungskanal bereitgestellter Versorgungsdruck bereitgestellt wird oder bereitstellbar ist, wobei ferner ein Drucksensor (16) zum Erfassen eines an dem Ausgangsanschluss (32) anliegenden Drucks umfasst ist, welcher fluidisch mit dem Druckkanal (54, 58, 60) verbunden oder in den Druckkanal (54, 58, 60) integriert ist, wobei
das Ventil (4) einen Ventilkörper (18) umfasst, und wobei der Eingangskanal (24), der Druckkanal (54, 58, 60) und der Ausgangskanal (30) im Inneren des Ventilkörpers (18) verlaufen und an einer Außenseite (20) des Ventilkörpers (18) der Eingangskanal (24) und der Ausgangskanal (30) ausmünden und der Ausgangsanschluss (32) an der Außenseite (20) des Ventilkörpers (18) angeordnet ist,
wobei
der Drucksensor (16) ein leiterplattenintegrierter Drucksensor (16) ist,
wobei in dem Ventilkörper (18) ein Messkanal (62) vorhanden ist, der an einem ersten Ende in den Druckkanal (54, 58, 60) ausmündet und an einem gegenüberliegenden zweiten Ende an der Außenseite (20) des Ventilkörpers (18) ausmündet, wobei
das zweite Ende des Messkanals (62) an einer Unterseite (63) des Ventilkörpers (18), die Teil der Außenseite (20) ist, ausmündet, wobei das Ventil (4) derart auf der Leiterplatte (6) montiert ist, dass die Unterseite (63) des Ventilkörpers (18) einer Oberseite (64) der Leiterplatte (6) im Sensorbereich (45) gegenüberliegt und
zwischen der Unterseite (63) des Ventilkörpers (18) und der Oberseite (64) der Leiterplatte (6) im Sensorbereich (45) eine Druckkammer (52) vorhanden ist, welche durch ein zwischen der Oberseite (64) der Leiterplatte (6) und der Unterseite (63) des Ventilkörpers (18) vorhandenes Dichtelement (66) gegenüber der Atmosphäre abgedichtet ist.

2. Pneumatische Steuer- und Messvorrichtung (2) nach Anspruch 1, **dadurch gekennzeichnet, dass** das Ventil (4) ein erstes von einem ersten Aktor (38) geschaltetes oder schaltbares erstes Dichtelement und ein zweites von einem zweiten Aktor (40) geschaltetes oder schaltbares zweites Dichtelement umfasst, wobei das erste Dichtelement dazu eingerichtet ist, den Eingangskanal (24) mit dem Druckkanal (54, 58, 60) zu verbinden, und wobei das zweite Dichtelement dazu eingerichtet ist, den Druckkanal (54, 58, 60) mit dem mit der Atmosphäre kommunizierenden Ausgangskanal (30) zu verbinden, so dass eine Druckentlastung in dem Druckkanal (54, 58, 60) herbeigeführt wird oder herbeiführbar ist.

3. Pneumatische Steuer- und Messvorrichtung (2) nach Anspruch 1 oder 2, **dadurch gekennzeichnet, dass** eine Leiterplatte (6) umfasst ist und das Ventil (4), elektronische Bauteile und elektrische Anschlusskontakte (8) der Steuer- und Messvorrichtung (2) auf der Leiterplatte (6) montiert sind, wobei der Drucksensor (16) in einem Sensorbereich (45) in die Leiterplatte (6) integriert ist.

4. Pneumatische Steuer- und Messvorrichtung (2) nach Anspruch 3, **dadurch gekennzeichnet, dass** ein Adapter (10, 10') aus einem Elastomermaterial auf den Ausgangsanschluss (32) aufgesteckt ist, wobei der Adapter (10, 10') einen weiteren Ausgangsanschluss (32) bereitstellt und ein Adaptervolumen einschließt, welches mit dem Ausgangsanschluss (32) des Ventils (4), dem weiteren Ausgangsanschluss (14, 14') des Adapters (10) und mit einer Oberseite (64) der Leiterplatte (6) im Sensorbereich (45) kommuniziert, so dass mit dem leiterplattenintegrierten Drucksensor (16) ein Druck innerhalb des Adaptervolumens bestimmt wird oder bestimmbar ist.

5. Pneumatische Steuer- und Messvorrichtung (2) nach einem der Ansprüche 1 bis 4, **dadurch gekennzeichnet, dass** der Aktor (38) ein elektromagnetischer Aktor ist.

6. Sitzkomfortsystem, umfassend eine pneumatische Steuer- und Messvorrichtung (2) nach einem der Ansprüche 1 bis 5 und einen Sitz, insbesondere einen Autositz, mit zumindest einem integrierten Luftkissen, welches fluidisch an den Ausgangsanschluss (32) angeschlossen ist.

## Claims

1. A pneumatic control and measuring device (2) with a valve (4) and with a pressure sensor (16), wherein the valve (4) comprises an input channel (24), a pressure channel (54, 58, 60), an output channel (30) and a sealing element switched or switchable by an actuator (38), and wherein the input channel (24) is fluidically connected with a compressed air supply channel and the sealing element is configured to connect the input channel (24) with the pressure channel (54, 58, 60) in that a supply pressure provided in the compressed air supply channel is or can be provided at an output connection (32) of the valve (4) fluidically communicating with the pressure channel (54, 58, 60), wherein furthermore a pressure sensor (16) for capturing a pressure present at the output connection (32) is included, which is fluidically connected with the pressure channel (54, 58, 60) or is integrated in the pressure channel (54, 58, 60), wherein
the valve (4) comprises a valve body (18), and wherein the input channel (24), the pressure channel (54, 58, 60) and the output channel (30) project inside the valve body (18) and the input channel (24) and the output channel (30) end on an outside (20) of the valve body (18) and the output connection (32) is arranged on the outside (20) of the valve body (18), wherein
the pressure sensor (16) is a printed-circuit-board-integrated pressure sensor (16),
wherein a measurement channel (62) is present in the valve body (18), which feeds into the pressure channel (54, 58, 60) on a first end and ends at an opposite-lying second end on the outside (20) of the valve body (18), wherein
the second end of the measurement channel (62) ends on a bottom side (63) of the valve body (18), which is part of the outside (20), wherein the valve (4) is mounted on the printed circuit board (6) such that the bottom side (63) of the valve body (18) lies opposite a top side (64) of the printed circuit board (6) in the sensor area (45) and
a pressure chamber (52) is present between the bottom side (63) of the valve body (18) and the top side (64) of the printed circuit board (6) in the sensor area (45), which is sealed with respect to the atmosphere by a sealing element (66) present between the top side (64) of the printed circuit board (6) and the bottom side (63) of the valve body (18).

2. The pneumatic control and measuring device (2) according to claim 1, **characterized in that** the valve (4) comprises a first sealing element switched or switchable by a first actuator (38) and a second sealing element switched or switchable by a second actuator (40), wherein the first sealing element is configured to connect the input channel (24) with the pressure channel (54, 58, 60) and wherein the second sealing element is configured to connect the pressure channel (54, 58, 60) with the output channel (30) communicating with the atmosphere **in that** a pressure release is or can be effectuated in the pressure channel (54, 58, 60).

3. The pneumatic control and measuring device (2) according to claim 1 or 2, **characterized in that** a printed circuit board (6) is included and the valve (4), electronic components and electrical connecting contacts (8) of the control and measuring device (2) are mounted on the printed circuit board (6), wherein the pressure sensor (16) is integrated in the printed circuit board (6) in a sensor area (45).

4. The pneumatic control and measuring device (2) according to claim 3, **characterized in that** an adapter (10, 10') made of an elastomer material is mounted on the output connection (32), wherein the adapter (10, 10') provides a further output connection (32) and encloses an adapter volume, which communicates with the output connection (32) of the valve (4), the further output connection (14, 14') of the adapter (10) and with a top side (64) of the printed circuit board (6) in the sensor area (45), so that a pressure within the adapter volume is or can be determined with the integrated-circuit-board-integrated pressure sensor (16).

5. The pneumatic control and measuring device (2) according to one of claims 1 to 4, **characterized in that** the actuator (38, 40) is an electromagnetic actuator.

6. A seat comfort system, comprising a pneumatic control and measuring device (2) according to one of claims 1 to 5 and a seat, in particular a car seat, with at least one integrated air pillow, which is fluidically connected to the output connection (32).

## Revendications

1. Dispositif pneumatique (2) de commande et de mesure avec une vanne (4) et avec un capteur de pression (16), la vanne (4) présentant un canal d'entrée (24), un canal de pression (54, 58, 60), un canal de sortie (30) et un élément d'étanchéité commuté ou commutable par un actionneur (38), et le canal d'entrée (24) étant en liaison fluidique avec un canal d'alimentation en air comprimé et l'élément d'étanchéité étant disposé pour relier le canal d'entrée (24) au canal de pression (54, 58, 60) de sorte qu'une pression d'alimentation fournie dans le canal d'alimentation en air comprimé est fournie ou est apte à être fournie à un raccord de sortie (32) de la vanne (4) communiquant fluidiquement avec le canal de pression (54, 58, 60), le capteur de pression (16) étant en outre prévu pour détecter une pression appliquée au niveau du raccord de sortie (32), qui est connecté fluidiquement au canal de pression (54, 58, 60) ou intégré dans le canal de pression (54, 58, 60),
la vanne (4) comprenant un corps de vanne (18), et le canal d'entrée (24), le canal de pression (54, 58, 60) et le canal de sortie (30) s'étendant à l'intérieur du corps de vanne (18), et le canal d'entrée (24) et le canal de sortie (30) débouchant sur une face extérieure (20) du corps de vanne (18), et le raccord de sortie (32) étant disposé sur la face extérieure (20) du corps de vanne (18), le capteur de pression (16) étant un capteur de pression intégré à une carte à circuit imprimé (16),
un canal de mesure (62) étant prévu dans le corps de vanne (18), qui débouche à une première extrémité dans le canal de pression (54, 58, 60) et qui, à une deuxième extrémité opposée, débouche sur la face extérieure (20) du corps de vanne (18),
la deuxième extrémité du canal de mesure (62) débouchant sur une face inférieure (63) du corps de vanne (18), qui fait partie de la face extérieure (20), la vanne (4) étant montée sur la carte à circuit imprimé (6) de telle sorte que la face inférieure (63) du corps de vanne (18) soit placée à l'opposée d'une face supérieure (64) de la carte à circuit imprimé (6) dans la zone du capteur (45), et une chambre de pression (52) est présente entre la face inférieure (63) du corps de vanne (18) et la face supérieure (64) de la carte à circuit imprimé (6) dans la zone du capteur (45), qui est rendue étanche à l'atmosphère par un élément d'étanchéité (66) présent entre la face supérieure (64) de la carte à circuit imprimé (6) et la face inférieure (63) du corps de vanne (18).

2. Dispositif pneumatique (2) de commande et de mesure selon la revendication 1, **caractérisé en ce que** la vanne (4) comprend un premier élément d'étanchéité commuté ou commutable par un premier actionneur (38) et un deuxième élément d'étanchéité commuté ou commutable par un deuxième actionneur (40), le premier élément d'étanchéité étant agencé pour relier le canal d'entrée (24) au canal de pression (54, 58, 60), et le deuxième élément d'étanchéité étant agencé pour relier le canal de pression (54, 58, 60) au canal de sortie (30) communiquant avec l'atmosphère, de sorte qu'une détente de la pression est provoquée ou est apte à être provoquée dans le canal de pression (54, 58, 60).

3. Dispositif pneumatique (2) de commande et de mesure selon la revendication 1 ou la revendication 2, **caractérisé en ce qu'**une carte à circuit imprimé (6) est prévue et la vanne (4), les composants électroniques et les contacts de connexion électrique (8) du dispositif (2) de commande et de mesure sont montés sur la carte à circuit imprimé (6), le capteur de pression (16) étant intégré dans la carte à circuit imprimé (6) dans une zone du capteur (45).

4. Dispositif pneumatique (2) de commande et de mesure selon la revendication 3, **caractérisé en ce qu'**un adaptateur (10, 10') en matériau élastomère est enfiché sur le raccord de sortie (32), l'adaptateur (10, 10') fournissant un autre raccord de sortie (32) et renfermant un volume d'adaptateur, qui communique avec le raccord de sortie (32) de la vanne (4), avec l'autre raccord de sortie (14, 14') de l'adaptateur (10) et avec une face supérieure (64) de la carte à circuit imprimé (6) dans la zone du capteur (45), de sorte qu'une pression à l'intérieur du volume de l'adaptateur est déterminée ou apte à être déterminée avec le capteur de pression (16) intégré à la carte à circuit imprimé.

5. Dispositif pneumatique (2) de commande et de mesure selon l'une des revendications 1 à 4, **caractérisé en ce que** l'actionneur (38) est un actionneur électromagnétique.

6. Système de confort de siège, comprenant un dispositif pneumatique (2) de commande et de mesure selon l'une des revendications 1 à 5 et un siège, en particulier un siège de voiture, avec au moins un coussin d'air intégré qui est en liaison fluidique avec le raccord de sortie (32).
